# EUROPÄISCHE PATENTSCHRIFT

(11) **EP 3 526 283 B1**
(45) Veröffentlichungstag und Bekanntmachung des Hinweises auf die Patenterteilung: **02.12.2020**
(21) Anmeldenummer: 17777036.9
(22) Anmeldetag: 28.09.2017
(51) Int. Cl.: C08K 3/34, C08K 3/36, C08K 5/3492, C08K 7/14

(54) **FLAMMGESCHÜTZTE POLYAMIDE**
FLAME-RETARDANT POLYAMIDES
POLYAMIDES IGNIFUGÉS

(30) Priorität: 13.10.2016 EP 16193701
(43) Veröffentlichungstag der Anmeldung: 21.08.2019
(73) Patentinhaber: BASF SE, 67056 Ludwigshafen am Rhein (DE)
(72) Erfinder: ROTH, Michael, 67056 Ludwigshafen (DE); MINGES, Christoph, 67056 Ludwigshafen (DE); USKE, Klaus, 67056 Ludwigshafen (DE); HEUSSLER, Michaela, 67056 Ludwigshafen (DE)
(74) Vertreter: BASF IP Association
(86) Internationale Anmeldenummer: PCT/EP2017/074636
(87) Internationale Veröffentlichungsnummer: WO 2018/069055

(56) Entgegenhaltungen:
- EP-A1- 1 762 592
- DE-A1-102015 209 451
- DE-T2- 69 912 241

## Beschreibung

Die Erfindung betrifft thermoplastische Formmassen, enthaltend
A) 30 bis 97 Gew.-% mindestens eines Polyamids,
B) 1 bis 20 Gew.-% einer Melaminverbindung
C) 1 bis 50 Gew.-% eines mineralischen Füllstoffes aufgebaut aus einer Mischung aus im wesentlichen (krypto)kristalliner (C1) und amorpher Kieselsäure (C2) und kalziniertem Kaolin (C3),
D) 0 bis 20 Gew.-% eines faserförmigen Füllstoffes,
E) 0 bis 25 Gew.-% Talkum,
F) 0 bis 15 Gew.-% weiterer Zusatzstoffe,
enthaltend als mineralischen Füllstoff C) eine Mischung aus 45 bis 70 Gew.-% C1 mit 5 bis 15 Gew.-% C2 und 20 bis 40 Gew.-% C3, bezogen auf 100% C, wobei die Komponente C) einen Al Gehalt von kleiner 15 Gew.-%, und einen Si Gehalt größer 30 Gew.-%, bezogen auf 100 % C, aufweist und wobei die Summe der Gewichtsprozente von A) bis F) 100 % beträgt.

Weiterhin betrifft die Erfindung die Verwendung zur Herstellung von Formkörpern jeglicher Art und Formkörper, die aus den erfindungsgemäßen Formmassen erhalten wurden.

Die Verwendung von Melamin-Derivaten (Melamincyanurat) als Flammschutzmittel für Polyamide ist seit vielen Jahren bekannt (siehe US 3660344).

Brandwidrig ausgerüstete Polyamide gewinnen in jüngster Zeit zunehmend an Bedeutung. Dabei besteht ein besonderes Interesse an Produkten in hellen Farbeinstellungen für den Elektrosektor. Von den bekannten Brandschutzsystemen sind jedoch roter Phosphor und Halogenverbindungen in Kombination mit Synergisten für diesen Anwendungsbereich nicht geeignet. Halogenverbindungen setzen die elektrischen Eigenschaften wie Kriechstromfestigkeit und Durchschlagfestigkeit herab. Roter Phosphor kommt wegen seiner Eigenfarbe für helle Farbeinstellungen nicht in Betracht. Zur Herstellung farbheller, unverstärkter und flammwidrig eingestellter Polyamide wird in der DE-A 1694254 der Zusatz von Melamin empfohlen. Bei glasfaserverstärkten Polyamiden ist Melamin und Melaminsalze wie z. B. Melamincyanurat weniger wirksam, die Glühdrahtfestigkeit dieser Produkte ist - speziell in dünnen Wandstärken - sehr niedrig.

Unverstärkte Formmassen, die generell eine höhere Glühdrahtbeständigkeit aufweisen, haben hingegen den Nachteil, daß die mechanischen Eigenschaften wie Steifigkeit und Festigkeit nicht ausreichend sind. Der Zusatz von Glasfasern zu Polyamid-Mischungen mit Melamincyanurat verbessert zwar die mechanischen Eigenschaften, jedoch werden die Flammschutzeigenschaften nachteilig beeinflußt, da Glasfasern durch den sogenannten Dochteffekt den Flammschutz drastisch verschlechtern. Entsprechend ist aus den EP-A 241 702, EP-A 848 729 bekannt, daß PA-Mischungen aus Glasfasern mit Melamincyanurat in ihrem Flammschutzverhalten verbessert werden können, indem Kurzglasfasern in der Mischung verwendet werden. Durch die Einstellung bestimmter Teilchengrößen des eingesetzten Melamincyanurates kann die Flammwidrigkeit ebenso verbessert werden (siehe EP-A 1423 460).

Die Wirksamkeit von Flammschutzadditivmischungen wird im Wesentlichen durch Brandprüfungen nach UL94-V beschrieben. Für bestimmte Anwendungen von flammgeschützten Polymeren in der Gebäudeinstallation sowie im Niederspannungs-Schaltgeräten ist jedoch vornehmlich der Glühdrahttest nach IEC 60695-2-12 von Bedeutung, wobei zusätzlich eine hohe Flammwidrigkeit wünschenswert ist.

Bei den genannten Patenten können Glasfasern, soweit verwendet, als konventionelle Endlosfasern (Rovings) oder Schnittfasern (4-6 mm lange Faserbündel) eingesetzt werden. Durch Scherung im Extruder ergibt sich dann eine Glasfaserlängenverteilung im Produkt, die bei üblicher Verarbeitung bei ca. 250-300 µm liegt (bezogen auf ein Produkt mit 25 % Glasfasergehalt). Dabei ist zu berücksichtigen, daß die mittlere Faserlänge im Allgemeinen mit zunehmendem Faseranteil sinkt, da es zu erhöhten Faser-Wechselwirkungen in der Einarbeitungszone und damit zu vermehrtem Faserbruch kommt (F. Raumsteiner, R. Theysohn, Comp. Sci. Techn. 23 (1985) 231).

DE 699 12 241 T2 betrifft flammgehemmte Polyamid-Zusammensetzungen. Die Zusammensetzungen enthalten neben Polyamid als System zur Flammhemmung ein Derivat von Melamin und kalziniertes Kaolin. Die kalzinierten Kaoline werden ausgehend von hydratisierten Aluminosilicaten (Kaolinit) erhalten durch Dehydratisierung in der Wärme, siehe Absatz [0011].

In den Beispielen werden Formmassen eingesetzt, in denen das Polyamid zum Großteil auf Polyhexamethylen-adipamid (PA 6.6) basiert. Polycaprolactam (PA 6) wird maximal in einer Menge von 10 % mit dem Polyhexamethylen-adipamid vermischt oder als Copolymer damit eingesetzt, siehe die Polyamide A₂ und A₃ im Beispiel.

Es werden Formkörper erhalten, die im Test UL-94 (0,8 mm) teilweise V0 und teilweise V2 ergeben. Der Test am glühenden Draht bei 1 mm führt zu 960 °C als Ergebnistemperatur. EP-A-1 762 592 betrifft polymere Formmassen auf Basis von thermoplastischen Polyamiden. Die Formmassen können Füllstoffe enthalten. Unter bevorzugten Füllstoffen sind neben anderen Füllstoffen auch amorphe Kieselsäure und Kaolin genannt. In den Beispielen wird Talkum eingesetzt, teilweise kombiniert mit Glasfasern, siehe die Komponenten E/1, E/2 und D.

Die Formmassen weisen als weiteren wesentlichen Inhaltsstoff Phosphinsäure-Salze oder Diphosphinsäure-Salze auf. Zudem müssen neben dem Füllstoff notwendigerweise faserförmige Verstärkungsstoffe vorliegen.

Aufgabe der vorliegenden Erfindung war es daher, flammgeschützte thermoplastische Formmassen zur Verfügung zu stellen, welche gute mechanische Eigenschaften und einen guten Flammschutz aufweisen. Insbesondere sollte der Zusatz von mineralischen Füllstoffen einen Flammschutz ermöglichen, aus dem möglichst geringe Nachbrennzeiten bei der Glühdrahtprüfung resultieren.

Überraschenderweise besonders geeignet ist ein natürlich vorkommender mineralischer Füllstoff, welcher aus einen Gemisch korpuskularer, (krypto)kristalliner und amorpher Kieselsäure und kalziniertem lamellarem Kaolin besteht (Neuburger Kieselerde). Das Mineralgemisch stellt ein loses, kristallines Haufwerk dar, das durch physikalische Methoden nicht zu trennen ist.

Der Kieselsäureanteil weist eine runde Kornform auf und besteht aus ca. 200 nm großen, aggregierten kryptokristallinen Primärpartikeln, die mit amorpher Kieselsäure opalartig überzogen sind. Durch diese Struktur ergeben sich die relativ hohe spezifische Oberfläche und Ölzahl.

Demgemäß wurden die eingangs definierten Formmassen gefunden. Bevorzugte Ausführungsformen sind den Unteransprüchen zu entnehmen.

Die einzelnen Komponenten der erfindungsgemäßen thermoplastischen Formmassen werden im Folgenden beschrieben.

### Komponente (A)

Als Komponente A) enthalten die erfindungsgemäßen Formmassen 30 bis 97, vorzugsweise 40 bis 92 und insbesondere 40 bis 80 Gew.-% mindestens eines Polyamides, wobei teilkristalline Polyamide bevorzugt sind.

Die Polyamide der erfindungsgemäßen Formmassen weisen im allgemeinen eine Viskositätszahl von 79,9 bis 350, vorzugsweise 110 bis 240 ml/g auf, bestimmt in einer 0,5 gew.-%igen Lösung in 96 gew.-%iger Schwefelsäure bei 25°C gemäß ISO 307.

Halbkristalline oder amorphe Harze mit einem Molekulargewicht (Gewichtsmittelwert) von mindestens 5.000, wie sie z.B. in den amerikanischen Patentschriften 2 071 250, 2 071 251, 2 130 523, 2 130 948, 2 241 322, 2 312 966, 2 512 606 und 3 393 210 beschrieben werden, sind bevorzugt.

Beispiele hierfür sind Polyamide, die sich von Lactamen mit 7 bis 13 Ringgliedern ableiten, wie Polycaprolactam, Polycapryllactam und Polylaurinlactam sowie Polyamide, die durch Umsetzung von Dicarbonsäuren mit Diaminen erhalten werden.

Als Dicarbonsäuren sind Alkandicarbonsäuren mit 6 bis 12, insbesondere 6 bis 10 Kohlenstoffatomen und aromatische Dicarbonsäuren einsetzbar. Hier seien nur Adipinsäure, Azelainsäure, Sebacinsäure, Dodecandisäure und Terephthal- und/oder Isophthalsäure als Säuren genannt.

Als Diamine eignen sich besonders Alkandiamine mit 6 bis 12, insbesondere 6 bis 8 Kohlenstoffatomen sowie m-Xylylendiamin (z.B. Ultramid® X17 der BASF SE, ein 1:1 molares Verhältnis von MXDA mit Adipinsäure), Di-(4-aminophenyl)methan, Di-(4-amino-cyclohexyl)-methan, 2,2-Di- (4-aminophenyl)-propan, 2,2-Di-(4-aminocyclohexyl)-propan oder 1,5-Diamino-2-methyl-pentan.

Bevorzugte Polyamide sind Polyhexamethylenadipinsäureamid, Polyhexamethylensebacinsäureamid und Polycaprolactam sowie Copolyamide 6/66, insbesondere mit einem Anteil von 5 bis 95 Gew.-% an Caprolactam-Einheiten (z.B. Ultramid® C31 der BASF SE).

Weiterhin geeignete Polyamide sind erhältlich aus ω-Aminoalkylnitrilen wie beispielsweise Aminocapronitril (PA 6) und Adipodinitril mit Hexamethylendiamin (PA 66) durch sog. Direktpolymerisation in Anwesenheit von Wasser, wie beispielsweise in der DE-A 10313681, EP-A 1198491 und EP 922065 beschrieben.
Außerdem seien auch noch Polyamide erwähnt, die z.B. durch Kondensation von 1,4-Diaminobutan mit Adipinsäure unter erhöhter Temperatur erhältlich sind (Polyamid 4,6). Herstellungsverfahren für Polyamide dieser Struktur sind z.B. in den EP-A 38 094, EP-A 38 582 und EP-A 39 524 beschrieben.
Weiterhin sind Polyamide, die durch Copolymerisation zweier oder mehrerer der vorgenannten Monomeren erhältlich sind, oder Mischungen mehrerer Polyamide geeignet, wobei das Mischungsverhältnis beliebig ist. Besonders bevorzugt sind Mischungen von Polyamid 66 mit anderen Polyamiden, insbesondere Copolyamide 6/66.

Weiterhin haben sich solche teilaromatischen Copolyamide wie PA 6/6T und PA 66/6T als besonders vorteilhaft erwiesen, deren Triamingehalt weniger als 0,5, vorzugsweise weniger als 0,3 Gew.-% beträgt (siehe EP-A 299 444). Weitere hochtemperaturbeständige Polyamide sind aus der EP-A 19 94 075 bekannt (PA 6T/6I/MXD6). Derartige Polyamide werden insbesondere in Mengen bis zu 20, vorzugsweise bis zu 10 Gew %, bezogen auf 100 % A), mit teilkristallinen Polyamiden eingesetzt.

Die Herstellung der bevorzugten teilaromatischen Copolyamide mit niedrigem Triamingehalt kann nach den in den EP-A 129 195 und 129 196 beschriebenen Verfahren erfolgen.

Die nachfolgende nicht abschließende Aufstellung enthält die genannten, sowie weitere Polyamide A) im Sinne der Erfindung und die enthaltenen Monomeren.

### AB-Polymere:

- PA 4: Pyrrolidon
- PA 6: ε-Caprolactam
- PA 7: Ethanolactam
- PA 8: Capryllactam
- PA 9: 9-Aminopelargonsäure
- PA 11: 11-Aminoundecansäure
- PA 12: Laurinlactam

### AA/BB-Polymere

- PA 46: Tetramethylendiamin, Adipinsäure
- PA 66: Hexamethylendiamin, Adipinsäure
- PA 69: Hexamethylendiamin, Azelainsäure
- PA 610: Hexamethylendiamin, Sebacinsäure
- PA 612: Hexamethylendiamin, Decandicarbonsäure
- PA 613: Hexamethylendiamin, Undecandicarbonsäure
- PA 1212: 1,12-Dodecandiamin, Decandicarbonsäure
- PA 1313: 1,13-Diaminotridecan, Undecandicarbonsäure
- PA 6T: Hexamethylendiamin, Terephthalsäure
- PA 9T: 1,9-nonanediamin, Terephthalsäure
- PA MXD6: m-Xylylendiamin, Adipinsäure
- PA 6I: Hexamethylendiamin, Isophthalsäure
- PA 6-3-T: Trimethylhexamethylendiamin, Terephthalsäure
- PA 6/6T: (siehe PA 6 und PA 6T)
- PA 6/66: (siehe PA 6 und PA 66)
- PA 6/12: (siehe PA 6 und PA 12)
- PA 66/6/610: (siehe PA 66, PA 6 und PA 610)
- PA 6I/6T: (siehe PA 6I und PA 6T)
- PA PACM 12: Diaminodicyclohexylmethan, Laurinlactam
- PA 6I/6T/PACM: wie PA 6I/6T + Diaminodicyclohexylmethan
- PA 12/MACMI: Laurinlactam, Dimethyl-diaminodicyclohexylmethan, Isophthalsäure
- PA 12/MACMT: Laurinlactam, Dimethyl-diaminodicyclohexylmethan, Terephthalsäure
- PA PDA-T: Phenylendiamin, Terephthalsäure

Selbstverständlich können auch Mischungen dieser Polyamide eingesetzt werden, wobei das Mischungsverhältnis beliebig ist.

Als Komponente B) enthalten die erfindungsgemäßen Formmassen 1 bis 20, vorzugsweise 2 bis 15 und insbesondere 2 bis 13 Gew.-% einer Melaminverbindung.

Das gemäß der Erfindung (Komponente B) bevorzugt geeignete Melamincyanurat ist ein Reaktionsprodukt aus vorzugsweise äquimolaren Mengen von Melamin (Formel I) und Cyanursäure bzw. Isocyanursäure (Formeln la und Ib)

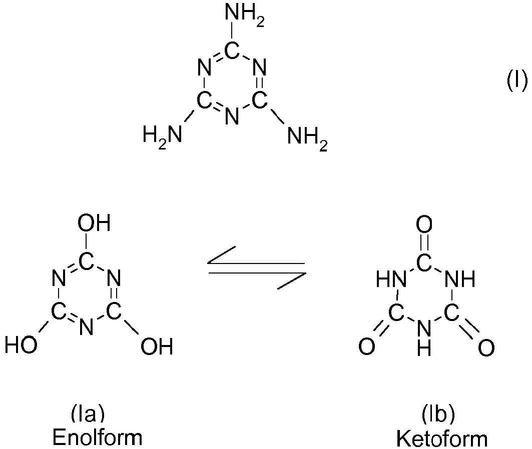

Man erhält es z.B. durch Umsetzung von wässrigen Lösungen der Ausgangsverbindungen bei 90 bis 100°C. Das im Handel erhältliche Produkt ist ein weißes Pulver mit einer mittleren Korngröße d₅₀ von 1,5 - 7 µm und einem d₉₉ Wert kleiner 50µm.

Weitere geeignete Verbindungen (oft auch als Salze oder Addukte bezeichnet) sind Melaminsulfat, Melamin, Melaminborat, -oxalat, -phosphat prim., -phosphat sec. und -pyrophosphat sec., Neopentylglycolborsäuremelamin sowie polymeres Melaminphosphat (CAS-Nr 56386-64-2 bzw. 218768-84-4).

Ganz besonders bevorzugt wird erfindungsgemäß Melamincyanurat eingesetzt, dessen Teilchengrößenverteilung beträgt:
d₉₈ < 25 µm, bevorzugt < 20 µm
d₅₀ < 4,5 µm, bevorzugt < 3 µm.

Unter einem d₅₀
- Wert versteht der Fachmann in der Regel den Teilchengrößenwert, bei welchem 50 % der Teilchen eine kleinere Teilchengröße aufweisen und 50 % eine größere Teilchengröße aufweisen.

Die Teilchengrößenverteilung wird üblicherweise durch Laserbeugung bestimmt (analog ISO 13320).

Als Komponente C) enthalten die erfindungsgemäßen Formmassen 1 bis 50, vorzugsweise 5 bis 45 und insbesondere 10 bis 40 Gew.-% eines mineralischen Füllstoffes aufgebaut aus einer Mischung aus im wesentlichen (krypto)kristalliner (C1) und amorpher Kieselsäure (C2) und kalziniertem Kaolin (C3).

Überraschenderweise besonders geeignet ist ein natürlich vorkommender mineralischer Füllstoff, welcher aus einen Gemisch korpuskularer, (krypto)kristalliner und amorpher Kieselsäure und lamellarem Kaolin besteht (Neuburger Kieselerde). Das Mineralgemisch stellt ein loses, kristallines Haufwerk dar, das durch physikalische Methoden nicht zu trennen ist, jedoch mittels Röntgenbeugungsanalytik bestimmbar ist.

Der Kieselsäureanteil weist eine runde Kornform auf und besteht aus ca. 200 nm großen, aggregierten kryptokristallinen Primärpartikeln, die mit amorpher Kieselsäure opalartig überzogen sind. Durch eine nachgeschaltete thermische Behandlung wird der Kaolinanteil in diesem mineralischen Füllstoff calciniert und ist als derartige Mischung im Handel erhältlich.

Der mineralische Füllstoff C) enthält eine Mischung aus 45 bis 70, vorzugsweise 53 bis 65 Gew.-% C1 mit 5 bis 15, vorzugsweise 7 bis 12 Gew.-% C2 und 20 bis 40, vorzugsweise 25 bis 35 Gew.-% C3, bezogen auf 100% C.

Dabei (im Gegensatz zu den meisten Kaolinen) weist die Komponente C) einen Al Gehalt von kleiner 15 % vorzugsweise 2 bis 10 und insbesondere 3 bis 8 Gew.-%, bezogen auf 100 % C) auf.

Zudem weist die Komponente C) einen Si Gehalt größer 30, vorzugsweise 35 bis 50 und insbesondere 38 bis 45 Gew.-%, bezogen auf 100 % C) auf.

Sowohl der Si als auch der AI Gehalt können mittels RFA (Röntgenfluoreszenzanalyse) gemäß DIN 51001 ermittelt werden.

Bevorzugte Komponenten C) weisen eine spezifische BET Oberfläche gemäß DIN ISO 9277 von 5 bis 15, vorzugsweise 6 bis 10 m²/g auf.

Bevorzugte Komponenten C) weisen eine Ölzahl gemäß DIN ISO 787 Teil 5 von 50 bis 60, vorzugsweise von 52 bis 58 g/100g auf.

Zur besseren Verträglichkeit mit der Polymermatrix kann der mineralische Füllstoff C) oberflächlich vorbehandelt sein. Für detaillierte Ausführungen sei auf Komponente D) verwiesen.

Als faserförmige Füllstoffe D) seien Kohlenstofffasern, Glasfasern, Glaskugeln, amorphe Kieselsäure, Calciumsilicat, Calciummetasilicat, Magnesiumcarbonat, Kaolin, Kreide, gepulverter Quarz, Glimmer, Bariumsulfat und Feldspat genannt, die in Mengen von 0 bis 20 , vorzugsweise von 0,5 bis 20, insbesondere von 5 bis 20 Gew.-% eingesetzt werden.

Als bevorzugte faserförmige Füllstoffe seien Kohlenstofffasern, Aramid-Fasern und Kaliumtitanat-Fasern genannt, wobei Glasfasern als E-Glas besonders bevorzugt sind. Diese können als Rovings oder Schnittglas in den handelsüblichen Formen eingesetzt werden.

Die faserförmigen Füllstoffe können zur besseren Verträglichkeit mit den Thermoplasten mit einer Silanverbindung oberflächlich vorbehandelt sein.

Geeignete Silanverbindungen sind solche der allgemeinen Formel

(X-(CH₂)ₙ)ₖ-Si-(O-CₘH₂ₘ₊₁)₄₋ₖ

in der die Substituenten folgende Bedeutung haben: 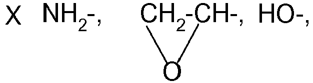
- n: eine ganze Zahl von 2 bis 10, bevorzugt 3 bis 4
- m: eine ganze Zahl von 1 bis 5, bevorzugt 1 bis 2
- k: eine ganze Zahl von 1 bis 3, bevorzugt 1

Bevorzugte Silanverbindungen sind Aminopropyltrimethoxysilan, Aminobutyltrimeth-oxysilan, Aminopropyltriethoxysilan, Aminobutyltriethoxysilan sowie die entsprechenden Silane, welche als Substituent X eine Glycidylgruppe enthalten.

Die Silanverbindungen werden im Allgemeinen in Mengen von 0,01 bis 2, vorzugsweise 0,025 bis 1,0 und insbesondere 0,05 bis 0,5 Gew.-% (bezogen auf D) zur Oberflächenbeschichtung eingesetzt.

Geeignet sind auch nadelförmige mineralische Füllstoffe.

Unter nadelförmigen mineralischen Füllstoffen wird im Sinne der Erfindung ein mineralischer Füllstoff mit stark ausgeprägtem nadelförmigen Charakter verstanden. Als Beispiel sei nadelförmiger Wollastonit genannt. Vorzugsweise weist das Mineral ein L/D-(Länge Durchmesser)-Verhältnis von 8 : 1 bis 35 : 1, bevorzugt von 8 : 1 bis 11 : 1 auf. Der mineralische Füllstoff kann gegebenenfalls mit den vorstehend genannten Silanverbindungen vorbehandelt sein; die Vorbehandlung ist jedoch nicht unbedingt erforderlich.

Als Komponente D) können die erfindungsgemäßen Polyamidformmassen einen faserförmigen Füllstoff mit einer mittleren arithmetischen Faserlänge von 70 bis 200 µm, bevorzugt 80 bis 180 µm und insbesondere 100 bis 150 µm enthalten. Der mittlere Durchmesser beträgt im Allgemeinen von 3 bis 30 µm oder mm, bevorzugt von 8 bis 20 µm oder mm und insbesondere 10 bis 14 µm oder mm.

Die gewünschte Faserlänge kann z.B. durch Mahlen in einer Kugelmühle eingestellt werden, wobei eine Faserlängenverteilung entsteht.

Die Reduzierung der Faserlänge führt, wenn die mittlere Faserlänge <200 µm ist, zu einem rieselfähigen Schüttgut, das wie ein Pulver in das Polymer eingemischt werden kann. Aufgrund der geringen Faserlänge tritt beim Einarbeiten nur noch eine geringe weitere Verkürzung der Faserlänge ein.

Der Fasergehalt wird üblicherweise nach Veraschen des Polymeren bestimmt. Zur Bestimmung der Faserlängenverteilung wird im Allgemeinen der Ascherückstand in Silikonöl aufgenommen und bei 20-facher Vergrößerung des Mikroskops fotografiert. Auf den Bildern können bei mindestens 500 Fasern die Länge ausgemessen und der (arithmetische) Mittelwert (d₅₀) daraus berechnet werden.

Bevorzugt beträgt der d₅₀-Wert kleiner gleich 180, vorzugsweise kleiner gleich 160 und insbesondere kleiner gleich 150 µm. Gleichzeitig mit der Bestimmung des d₅₀ Wertes können auch die d₁₀- und d₉₀-Werte der Glasfaserlängenverteilung bestimmt werden. Der d₁₀-Wert bedeutet hierbei, daß 10 % der Glasfasern der Probe eine Länge x aufweisen. Für die vorliegenden erfindungsgemäßen Formmassen haben sich d₁₀-Werte kleiner gleich 60 µm, vorzugsweise kleiner gleich 55 µm und d₉₀ Werte kleiner gleich 350 µm, vorzugsweise kleiner gleich 290 µm als vorteilhaft erwiesen.

Als Komponente E) enthalten die erfindungsgemäßen Formmassen 0 bis 25 Gew- % Talkum. Dieser wird - falls mit eingesetzt- vorzugsweise in Mengen von 5 bis 20 Gew- %, insbesondere von 10 bis 20 Gew- % eingesetzt.

Talkum ist ein hydratisiertes Magnesiumsilikat der Zusammensetzung Mg₃[(OH)₂/Si₄O₁₀] oder 3 MgOx4SiO₂xH₂O.Diese sogenannten Dreischicht-Phyllosilikate weisen einen triklinen, monoklinen oder rhombischen Kristallaufbau auf mit blättchenförmigem Erscheinungsbild. Anweiteren Spurenelementen Können Mn, Ti, Cr, Ni, Na, und K anwesend sein, wobei die OH-Gruppe durch Fluorid ersetzt sein kann.

Besonders bevorzugt wird Talkum eingesetzt, dessen Teilchengrößen zu 100% kleiner 20 µm beträgt. Die Teilchengrößenverteilung wird üblicherweise durch Sedimentationsanalyse bestimmt und beträgt vorzugsweise < 20 µm : 100 Gew.-%, < 10 µm: 99 Gew.-%, < 5µm: 85 Gew.-%, <3 µm:60 Gew.-%, < 2 µm: 43 Gew.-%. Derartige Produkte sind als Micro-Talc I.T. extra im Handel erhältlich.

### Komponente (F)

Als Komponente F) können die erfindungsgemäßen thermoplastischen Formmassen 0 bis 2, bevorzugt 0,01 bis 2 Gew.-%, bevorzugt 0,05 bis 1,5 Gew.-%, besonders bevorzugt 0,1 bis 1,5 Gew.-% mindestens eines Wärmestabilisators enthalten.

In einer bevorzugten Ausführungsform sind die Wärmestabilisatoren ausgewählt aus der Gruppe bestehend aus
- Verbindungen des ein- oder zweiwertigen Kupfers, z.B. Salze des ein- oder zweiwertigen Kupfers mit anorganischen oder organischen Säuren oder ein- oder zweiwertigen Phenolen, die Oxide des ein- oder zweiwertigen Kupfers, oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCI, CuBr, Cul, CuCN und Cu₂O, sowie die zweiwertigen Kupferverbindungen CuCl₂, CuSO₄, CuO, Kupfer(II)acetat oder Kupfer(II)stearat. Sofern eine Kupferverbindung verwendet wird, beträgt vorzugsweise die Menge an Kupfer 0,005 bis 0,5, insbesondere 0,005 bis 0,3 und besonders bevorzugt 0,01 bis 0,2 Gew.-%, bezogen auf die Summe der Komponenten A) bis F).
   Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise gleicher chemischer Natur wie Komponente (A), zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogenide wie NaI, KI, NaBr, KBr eingesetzt, wobei das molare Verhältnis von Metallhalogenid zu Kupfer 0,5 bis 20, bevorzugt 1 bis 10 und besonders bevorzugt 2 bis 5 beträgt,
- Stabilisatoren auf Basis sekundärer aromatischer Amine, wobei diese Stabilisatoren vorzugsweise in einer Menge von 0,2 bis 2, bevorzugt 0,5 bis 1,5 Gew.-% vorliegen,
- Stabilisatoren auf Basis sterisch gehinderter Phenole, wobei diese Stabilisatoren vorzugsweise in einer Menge von 0,05 bis 1,5, bevorzugt 0,1 bis 1 Gew.-% vorliegen, und
- Mischungen der vorstehend genannten Stabilisatoren.

Besonders bevorzugte Beispiele für erfindungsgemäß einsetzbare Stabilisatoren auf Basis sekundärer aromatischer Amine sind Addukte aus Phenylendiamin mit Aceton (Naugard A), Addukte aus Phenylendiamin mit Linolen, Naugard 445 (II), N,N'-Dinaphthyl-p-phenylendiamin (III), N-Phenyl-N'-cyclohexyl-p-phenylendiamin (IV) oder Mischungen von zwei oder mehreren davon

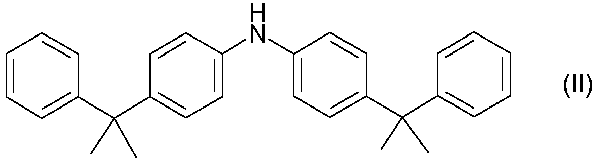

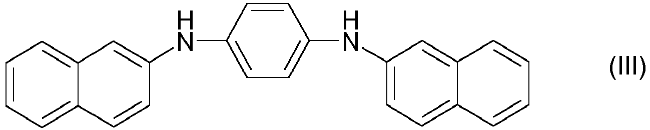

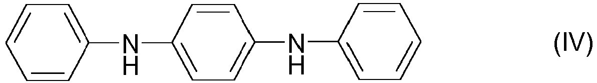

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid (V), Bis-(3,3-bis-(4'-hydroxy-3'-tert-butylphenyl)-butansäure)-glykolester (VI), 2,1'-Thioethylbis-(3-(3,5-di.tert-butyl-4-hydroxyphenyl)-propionat (VII), 4-4'-Butyliden-bis-(3-methyl-6-tert.-butylphenol) (VIII), Triethylenglykol-3-(3-tert-butyl-4-hydroxy-5-methylphenyl)-propionat (IX) oder Mischungen von zwei oder mehr davon

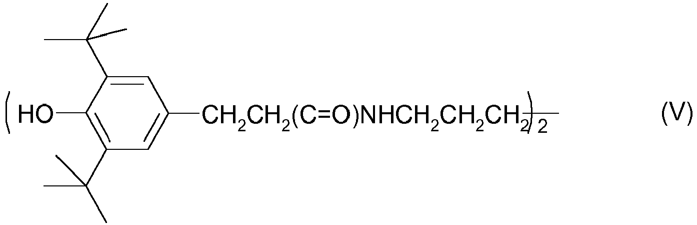

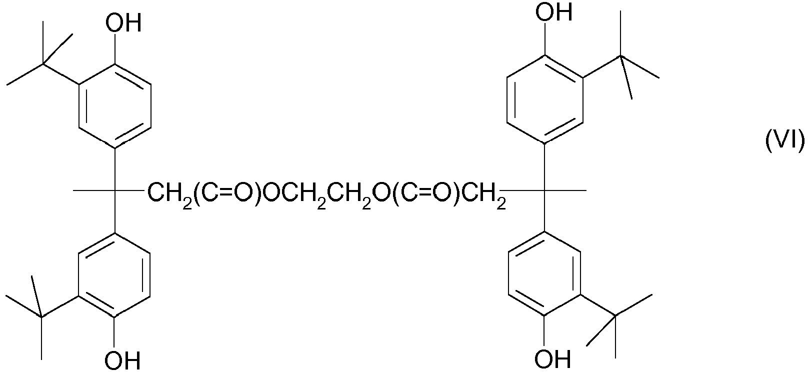

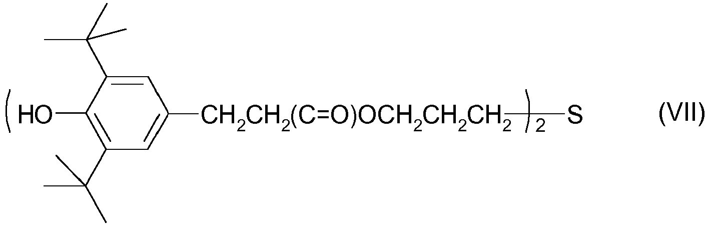

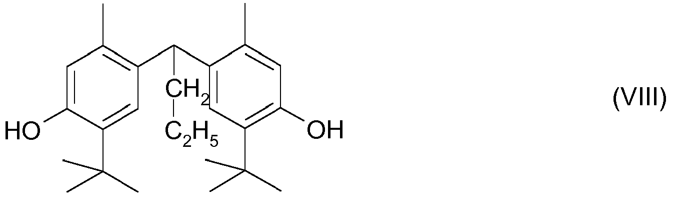

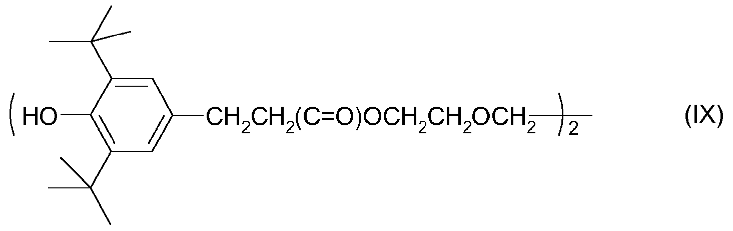

Die erfindungsgemäßen thermoplastischen Formmassen können 0 bis 1,5 Gew.-%, bevorzugt 0,05 bis 1,5 Gew.-%, besonders bevorzugt 0,1 bis 1 Gew.-% eines Entformungshilfsmittel enthalten.

Entformungshilfsmittel werden der Formmasse zugegeben, um das Entformen des hergestellten Produkts, d.h. das Ablösen des Formteils aus der Form, zu erleichtern.

In einer bevorzugten Ausführungsform sind die Entformungsmittel ausgewählt aus der Gruppe bestehend aus Fettsäuren und deren Alkali- oder Erdalkali- oder Zinksalzen, Diamiden aus Alkylendiamin und Fettsäuren. Besonders bevorzugt werden Entformungsmittel eingesetzt, ausgewählt aus der Gruppe bestehend aus Calciummontanat, Stearinsäure, Behensäure, Stearylalkohol, Stearinsäurealkylestern und -amiden sowie Estern des Pentaerythrits mit langkettigen Fettsäuren wie Stearin, Ca- oder Zn-stearat.

Die erfindungsgemäßen thermoplastischen Formmassen können 0 bis 40 Gew.-%, bevorzugt 0 bis 30 Gew.-% weitere Zusatzstoffe F) (auch Additive genannt) enthalten.

Als Additive können alle dem Fachmann bekannten Additive für thermoplastische Formmassen enthaltend Polyamide oder Copolyamide eingesetzt werden. Diese sind bevorzugt ausgewählt aus der Gruppe bestehend aus Pigmenten, Schlagzähmodifier, Nukleierungsmittel und Mischungen davon.

Die Pigmente zur Einfärbung von Thermoplasten sind allgemein bekannt, siehe z.B. R. Gächter und H. Müller, Taschenbuch der Kunststoffadditive, Carl Hanser-Verlag, 1983, Seite 494 bis 510.

Als erste bevorzugte Gruppe von Pigmenten sind Weißpigmente zu nennen wie Zinkoxid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Russ, der meist in Form von Furnace- oder Gasruß eingesetzt wird. Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente beziehungsweise Farbstoffe in Mischungen einzusetzen, zum Beispiel Russ mit Kupferphthalocyaninen, da allgemein die Farbdispergierung im Thermoplasten erleichtert wird.
Zur Schwarzfärbung kann außer Pigmenten auch Nigrosin eingesetzt werden.

Die erfindungsgemäßen thermoplastischen Formmassen können nach bekannten Verfahren hergestellt werden, indem man die Ausgangskomponenten A) bis C) sowie gegebenenfalls D) bis F) in üblichen Mischvorrichtungen mischt und anschließend extrudiert. Geeignete Verarbeitungsmaschinen sind in Handbuch der Kunststoffextrusion, Vol. 1 Grundlagen, Editors F. Hensen, W. Knappe, H. Potente, 1989, pp. 3-7, ISBN:3-446-14339-4 (Vol. 2 Extrusionsanlagen 1986, ISBN 3-446-14329-7) beschrieben. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt - auch als Konzentrat in einem Trägerpolymer (Masterbatch) - hinzugegeben werden. Die Mischtemperaturen liegen in der Regel bei 230 bis 320°C.

Die erfindungsgemäßen thermoplastischen Formmassen zeichnen sich durch eine gute Mechanik sowie HDT und eine gute Flammschutzbewertung gemäß UL 94 aus, welche im hohen Maße reproduzierbar ist sowie eine sehr gute Glühdrahtbeständigkeit (geringe Nachbrennzeiten).

Diese eignen sich zur Herstellung von Fasern, Folien und Formkörpern jeglicher Art. Nachfolgend sind einige Beispiele genannt: Steckverbinder, Stecker, Steckerteile, Kabelbaumkomponenten, Schaltungsträger, Schaltungsträgerkomponenten, dreidimensional spritzgegossene Schaltungsträger, elektrische Verbindungselemente und mechatronische Komponenten.

Die erfindungsgemäß aus den thermoplastischen Formmassen herzustellenden Formteile oder Halbzeuge können beispielsweise in der Kraftfahrzeug-, Elektro-, Elektronik-, Telekommunikations-, Informationstechnologie, Unterhaltungs-, Computerindustrie, in Fahrzeugen und anderen Fortbewegungsmitteln, in Schiffen, Raumschiffen, im Haushalt, in Büroausstattungen, Sport, in der Medizin sowie allgemein in Gegenständen und Gebäudeteilen, die einen erhöhten Brandschutz erfordern, angewandt werden.

Für den Küchen- und Haushaltsbereich ist der Einsatz fließverbesserter Polyamide zur Herstellung von Komponenten für Küchengerate, wie z.B. Friteusen, Bügeleisen, Knöpfe, sowie Anwendungen im Garten- und Freizeitbereich möglich.

### Beispiele

Es wurden folgende Komponenten eingesetzt:

### Komponente A:

Polyamid 6 mit einer Viskositätszahl VZ von 125 ml/g, gemessen als 0,5 gew.-%ige Lösung in 96 gew.-%iger Schwefelsäure bei 25°C nach ISO 307 (Es wurde Ultramid ® B24 der BASF SE verwendet).

### Komponente B:

Melamincyanurat mit einer mittleren Teilchengröße d₅₀ von ∼2.6 µm (*Melapur ® MC* 25 der BASF SE).

### Komponente C/1a:

kalzinierter mineralischer Füllstoff, welcher aus einem Gemisch amorpher (10 Gew.-%) und kristalliner Kieselsäure (60 Gew.-%) und kalziniertem lamellarem Kaolin (30 Gew.-%) besteht gemäß Röntgenbeugungsanalyse mit Rietveld-Auswertung. (SILFIT ® Z91 der Hoffmann Mineral)

Spezifikation und Messmethoden:
Spezifische BET -Oberfläche :8 m²/g (DIN ISO 9277),
Ölzahl: 55 g/100g (DIN ISO 787 Teil 5),
Si Gehalt: 42 %
Al Gehalt: 4.8 %

### Komponente C/1b:

kalzinierter mineralischer Füllstoff, welcher aus einem Gemisch amorpher (10 Gew.-%) und kristalliner Kieselsäure (60 Gew.-%) und kalziniertem lamellarem Kaolin (30 Gew.-%) besteht gemäß Röntgenbeugungsanalyse mit Rietveld-Auswertung.

Oberflächenschlichte: Aminosilan (AKTIFIT ® AM der Hoffmann Mineral)

Spezifikation und Messmethoden:
Spezifische BET -Oberfläche :7 m²/g (DIN ISO 9277),
Ölzahl: 55 g/100g (DIN ISO 787 Teil 5),
Si Gehalt: 41 %
Al Gehalt: 5.6 %

### Komponente C/1c:

Handelsübliches Talkum (Grade HP 325 der Firma Pechel GmbH) mit einem Gehalt von 60-62 Gew.-% Siliciumdioxid, 30-32 Gew.-% Magnesiumoxid und einer mittleren Teilchengröße d₅₀ von 10 - 14 µm

### Komponente D/1:

Standard Schnittglasfaser für Polyamide, L = 4.0 mm, D = 10 µm

### Komponente D/2:

Kurzglasfaser, mittlere Länge (d₅₀) ∼ 210 µm, D = 10 µm

Komponenten F: als weitere Zusatzstoffe wurde in allen Formulierungen 0.3 Gew.-% 3,3'-Bis(3,5-di-tert-butyl-4-hydroxyphenyl)-N,N'-hexamethylenedipropionamide (CAS-No. 23128-74-7), 0.3 Gew.-% Aluminiumstearat (CAS-No. 300-92-5), und 2.5 Gew.-% Titandioxid (CAS-No. 13463-67-7) eingesetzt.

### Herstellung der Formmassen

Zum Nachweis der erfindungsgemäß beschriebenen Verbesserungen für Glühdrahtbeständigkeit wurden durch Compoundierung entsprechende Polyamid-Formmassen angefertigt. Die einzelnen Komponenten wurden hierzu in einem Zweiwellenextruder ZSK 26 (Fa. Berstorff) bei einem Durchsatz von 20 kg/h und ca. 250 - 270°C bei flachem Temperaturprofil gemischt, als Strang ausgetragen, bis zur Granulierfähigkeit abgekühlt und granuliert.

### Messungen

Die Prüfkörper für die in Tabelle 1 aufgeführten Untersuchungen wurden auf einer Spritzgießmaschine des Typs Arburg 420C bei einer Massetemperatur von ca. 250 - 290°C und einer Werkzeugtemperatur von ca. 80°C verspritzt.

Die Flammwidrigkeit der Formmassen wurde zum einen nach der Methode UL94V (Underwriters Laboratories Inc. Standard of Safety, "Test for Flammability of Plastic Materials for Parts in Devices and Appliances", S. 14 bis S. 18 Northbrook 1998) bestimmt.

Die Glühdrahtbeständigkeit wurde gemäß der Glühdrahtentzündlichkeitsprüfung GWFI (Glow-Wire-Flammability-Index) nach DIN EN 60695-2-12 bestimmt. Bei der GWFI-Prüfung wurde an 3 Prüfkörpern (beispielsweise an Platten der Geometrie 60 x 60 x 1,0 mm oder Rundscheibe) mit Hilfe eines glühenden Drahtes bei Temperaturen zwischen 550 und 960°C die maximale Temperatur ermittelt, die in 3 aufeinander folgenden Tests auch während der Einwirkzeit des Glühdrahtes nicht zur Entzündung führte. Der Probekörper wurde 30 Sekunden lang mit einer Kraft von 1 Newton gegen einen aufgeheizten Glühdraht gepresst. Die Eindringtiefe des Glühdrahts war auf 7 mm begrenzt. Der Test gilt als bestanden wenn der Probekörper nach Entfernen des Glühdrahtes weniger als 30 Sekunden nachbrennt und wenn sich ein unter dem Probekörper liegendes Seidenpapier nicht entzündet.

Die Summe der Anteile der Komponenten A) bis F) in Tabelle 1 ergänzen sich zu 100 Gew.-%. Die Zusammensetzungen der Formmassen und die Ergebnisse der Messungen sind der Tabelle 1 zu entnehmen.

**Tabelle 1**

| Komponente/Testmethode | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| A | 63.9 | 70.9 | 68.9 | 66.9 | 65.9 | 62.9 | 60.9 | 58.9 | 55.9 | 63.9 | 63.9 | 60.9 | 60.9 | 60.9 |
| B | 8 | 6 | 8 | 10 | 6 | 4 | 6 | 8 | 6 | 8 | 8 | 6 | 6 | 6 |
| C/1a | 25 | | | | | | | | | | | | | |
| C/1b | | 20 | 20 | 20 | 25 | 30 | 30 | 30 | 35 | 20 | 20 | 25 | 20 | 15 |
| C/1c | | | | | | | | | | | | 5 | 10 | 15 |
| D/1 | | | | | | | | | | | 5 | | | |
| D/2 | | | | | | | | | | 5 | | | | |
| F | 3.1 | 3.1 | 3.1 | 3.1 | 3.1 | 3.1 | 3.1 | 3.1 | 3.1 | 3.1 | 3.1 | 3.1 | 3.1 | 3.1 |
| Zug-E-Modul /MPa (ISO 527) | 5122 | 4585 | 4547 | 4640 | 4943 | 5224 | 5335 | 5550 | 5828 | 5217 | 5644 | 5360 | 5727 | 5936 |
| Streckspannung /MPa (ISO 527) | 77 | 82 | 82 | 81 | 80 | 82 | 81 | 80 | 82 | 81 | 87 | 77 | 76 | 74 |
| Bruchdehnung /% (ISO 527) | 2.4 | 3.2 | 3.2 | 3.1 | 3.0 | 3.0 | 2.8 | 2.6 | 2.7 | 2.8 | 2.7 | 2.8 | 2.5 | 2.4 |
| Schlagzähigkeit /kJ/m² (ISO 179/1eU) | 38 | 96 | 64 | 53 | 69 | 72 | 62 | 50 | 55 | 41 | 33 | 47 | 37 | 36 |
| Kerbschlagzähigkeit /kJ/m² (ISO 179/1eA) | 2.0 | | | | 3.4 | 3.4 | 3.2 | 2.8 | 3.1 | 3.3 | 2.0 | | | |
| MVR 275°C/5kg (ISO1133) | 186 | 230 | 215 | 206 | 207 | 193 | 179 | 155 | 134 | 184 | 173 | 186 | 183 | 186 |
| HDT/A /°C DIN EN ISO 75 | 83 | | | | 77 | 81 | 83 | 89 | 93 | 87 | 140 | 93 | 93 | 97 |
| CTI /V (DIN EN 60112) | | 575 | 550 | 550 | | | | | | | | | | |
| UL94-V Prüfung (0.8 mm) | V-2 | V-2 | V-2 | V-2 | V-2 | V-2 | V-2 | V-2 | V-2 | V-2 | V-2 | V-2 | V-2 | V-2 |
| GWFI 960° C / 0.5mm | | erfüllt | erfüllt | erfüllt | | | | | | | | | | |
| GWFI 960° C / 0.75mm | erfüllt | erfüllt | erfüllt | erfüllt | erfüllt | erfüllt | erfüllt | erfüllt | erfüllt | erfüllt | erfüllt | | | |
| GWFI 960° C / 1.0mm | erfüllt | erfüllt | erfüllt | erfüllt | erfüllt | erfüllt | erfüllt | erfüllt | erfüllt | erfüllt | erfüllt | erfüllt | erfüllt | erfüllt |
| GWFI 960° C / 1.5mm | erfüllt | erfüllt | erfüllt | erfüllt | erfüllt | erfüllt | erfüllt | erfüllt | erfüllt | erfüllt | erfüllt | erfüllt | erfüllt | erfüllt |

Anhand der Daten von Tabelle 1 geht hervor, daß die erfindungsgemäßen Zusammensetzungen sowohl hinsichtlich Flammwidrigkeit und Glühdrahtbeständigkeit (UL94 V-2 und GWFI 960° C bei 1.0mm) als auch bezüglich mechanischer Eigenschaften sehr gute Werte zeigen.

## Patentansprüche

1. Thermoplastische Formmassen, enthaltend
A) 30 bis 97 Gew.-% mindestens eines Polyamids,
B) 1 bis 20 Gew.-% einer Melaminverbindung,
C) 1 bis 50 Gew.-% eines mineralischen Füllstoffes aufgebaut aus einer Mischung aus im wesentlichen (krypto)kristalliner (C1) und amorpher Kieselsäure (C2) und kalziniertem Kaolin (C3),
D) 0 bis 20 Gew.-% eines faserförmigen Füllstoffes,
E) 0 bis 25 Gew.-% Talkum,
F) 0 bis 15 Gew.-% weiterer Zusatzstoffe,
enthaltend als mineralischen Füllstoff C) eine Mischung aus 45 bis 70 Gew.-% C1 mit 5 bis 15 Gew.-% C2 und 20 bis 40 Gew.-% C3, bezogen auf 100% C, wobei die Komponente C) einen Al Gehalt von kleiner 15 Gew.-%, und einen Si Gehalt größer 30 Gew.-%, bezogen auf 100 % C, aufweist und wobei die Summe der Gewichtsprozente von A) bis F) 100 % beträgt.

2. Thermoplastische Formmassen nach Anspruch 1, in denen die Komponente B) aus Melamincyanurat aufgebaut ist.

3. Thermoplastische Formmassen nach den Ansprüchen 1 oder 2, enthaltend
A) 30 bis 97 Gew.-%
B) 1 bis 20 Gew.-%
C) 1 bis 50 Gew.-%
D) 0,5 bis 20 Gew.-%
E) 0 bis 25 Gew.-%
F) 0 bis 15 Gew.-%

4. Thermoplastische Formmassen nach den Ansprüchen 1 bis 4, wobei die Komponente C) eine spezifische BET Oberfläche gemäß DIN ISO 9277 von 5 bis 15 m²/g aufweist.

5. Thermoplastische Formmassen nach Anspruch 4, wobei die Komponente C) eine Ölzahl gemäß DIN ISO 787 Teil 5 von 50 bis 60 g/100g aufweist.

6. Formmassen nach einem der Ansprüche 1 bis 5, in denen der Wärmestabilisator F) ausgewählt ist aus der Gruppe, bestehend aus Verbindungen des ein- und zweiwertigen Kupfers, Stabilisatoren auf Basis sekundärer aromatischer Aminen, Stabilisatoren auf Basis sterisch gehinderter Phenole oder deren Mischungen.

7. Verwendung der thermoplastischen Formmassen nach einem der Ansprüche 1 bis 6 zur Herstellung von Fasern, Folien, Formkörpern.

8. Formkörper jeglicher Art, erhältlich aus den thermoplastischen Formmassen gemäß den Ansprüchen 1 bis 6.

## Claims

1. A thermoplastic molding composition comprising
A) from 30 to 97% by weight of at least one polyamide,
B) from 1 to 20% by weight of a melamine compound,
C) from 1 to 50% by weight of a mineral filler composed of a mixture of in essence (crypto)crystalline silica (C1) and amorphous silica (C2) and of calcined kaolin (C3),
D) from 0 to 20% by weight of a fibrous filler,
E) from 0 to 25% by weight of talc powder,
F) from 0 to 15% by weight of other additives,
comprising as mineral filler C) a mixture of from 45 to 70% by weight of C1 with from 5 to 15% by weight of C2 and from 20 to 40% by weight of C3, based on 100% of C, where component C) has less than 15% by weight Al content, and has more than 30% by weight Si content, based on 100% of C, and where the total of the percentages by weight of A) to F) is 100%.

2. The thermoplastic molding composition according to claim 1 in which component B) is composed of melamine cyanurate.

3. The thermoplastic molding composition according to claim 1 or 2, comprising
A) from 30 to 97% by weight
B) from 1 to 20% by weight
C) from 1 to 50% by weight
D) from 0.5 to 20% by weight
E) from 0 to 25% by weight
F) from 0 to 15% by weight

4. The thermoplastic molding composition according to claims 1 to 4, where the BET specific surface area of component C) in accordance with DIN ISO 9277 is from 5 to 15 m²/g.

5. The thermoplastic molding composition according to claim 4, where the oil absorption value of component C) in accordance with DIN ISO 787 Part 5 is from 50 to 60 g/100 g.

6. The molding composition according to any of claims 1 to 5 in which the heat stabilizer F) is selected from the group consisting of compounds of mono- and divalent copper, stabilizers based on secondary aromatic amines, stabilizers based on sterically hindered phenols and mixtures of these.

7. The use of the thermoplastic molding compositions according to any of claims 1 to 6 for the production of fibers, films, or moldings.

8. A molding of any type obtainable from the thermoplastic molding compositions according to claims 1 to 6.

## Revendications

1. Masses à mouler thermoplastiques, contenant
A) 30 à 97 % en poids d'au moins un polyamide,
B) 1 à 20 % en poids d'un composé de type mélamine,
C) 1 à 50 % en poids d'une charge minérale construite à partir d'un mélange composé essentiellement de silice (crypto)cristalline (C1) et de silice amorphe (C2) et de kaolin calciné (C3),
D) 0 à 20 % en poids d'une charge fibreuse,
E) G à 25 % en poids de talc,
F) 0 à 15 % en poids d'autres additifs,
contenant en tant que charge minérale C) un mélange composé de 45 % à 70 % en poids de C1 avec 5 à 15 % en poids de C2 et 20 à 40 % en poids de C3, par rapport à 100 % de C, le composant C) présentant une teneur en Al inférieure à 15 % en poids, et une teneur en Si supérieure à 30 % en poids, par rapport à 100 % de C, et la somme des pourcentages en poids de A) à F) étant de 100 %.

2. Masses à mouler thermoplastiques selon la revendication 1, dans lesquelles le composant B) est construit à partir de cyanurate de mélamine.

3. Masses à mouler thermoplastiques selon la revendication 1 ou 2, contenant
A) 30 à 97 % en poids
B) 1 à 20 % en poids
C) 1 à 50 % en poids
D) 0,5 % à 20 % en poids
E) 0 à 25 % en poids
F) 0 à 15 % en poids.

4. Masses à mouler thermoplastiques selon les revendications 1 à 4, le composant C) présentant une surface spécifique BET selon la norme DIN ISO 9277 de 5 à 15 m²/g.

5. Masses à mouler thermoplastiques selon la revendication 4, le composant C) présentant un indice d'huile selon la norme DIN ISO 787 Partie 5 de 50 à 60 g/100 g.

6. Masses à mouler thermoplastiques selon l'une quelconque des revendications 1 à 5, dans lesquelles le stabilisant à la chaleur F) est choisi dans le groupe constitué par des composés monovalents et divalents du cuivre, des stabilisants à base d'amines aromatiques secondaires, des stabilisants à base de phénols stériquement encombrés et leurs mélanges.

7. Utilisation des masses à mouler thermoplastiques selon l'une quelconque des revendications 1 à 6 pour la préparation de fibres, de feuilles, de corps moulés.

8. Corps moulé de toute sorte, pouvant être obtenu à partir des masses à mouler thermoplastiques selon les revendications 1 à 6.
